# EUROPÄISCHE PATENTSCHRIFT

(11) **EP 2 298 500 B1**
(45) Veröffentlichungstag und Bekanntmachung des Hinweises auf die Patenterteilung: **22.08.2018**
(21) Anmeldenummer: 10176417.3
(22) Anmeldetag: 13.09.2010
(51) Int. Cl.: B25B 7/08, B25B 7/22, B25B 27/14, H01R 43/033, H01R 43/042, H02G 1/12, B25B 7/02, B21F 1/06, B26B 17/00

(54) **Zange**
Clipper
Pince

(30) Priorität: 22.09.2009 DE 102009042259
(43) Veröffentlichungstag der Anmeldung: 23.03.2011
(73) Patentinhaber: Orbis Will GmbH + Co. KG, 48683 Ahaus (DE)
(72) Erfinder: Groten, Andreas H., 48683 Ahaus (DE)
(74) Vertreter: Müller, Enno

(56) Entgegenhaltungen:
- CA-A1- 1 054 834
- US-A- 3 956 950
- US-A1- 2007 169 593
- US-B1- 6 497 133

## Beschreibung

Die Erfindung betrifft zunächst eine Zange nach den Merkmalen des Oberbegriffes des Anspruches 1.

Derartige Zangen sind in verschiedener Hinsicht bereits bekannt geworden. Es wird beispielsweise auf die DE 589 836 A verwiesen. Hierbei sind maulbereichsseitig des Gelenks, das auch als Gewerbe bezeichnet wird, Flachzangenbacken ausgebildet und ein Biegebereich, während griffbereichsseitig an den Zangenschenkeln ein Schneidbereich und weiter ein Schneid-Drehbereich ausgebildet ist. Die griffbereichsseitig ausgebildeten Arbeitsbereiche sind im Hinblick auf eine übliche Handhabung einer Zange nicht günstig zugänglich. Die Zange oder das Werkstück muss quer zu einer durch die Zangenschenkel aufgespannten Ebene zu den Arbeitsbereichen oder zu dem Werkstück zur Einwirkung geführt werden. Weiter ist etwa auf die DE 40 06 111 C1 zu verweisen. Bei der hieraus bekannten Zange sind maulseitig des Gelenkes zunächst Seitenschneiderausformungen ausgebildet, sodann zusammenwirkende Biegeausformungen mit einem Zugang rechtwinklig zu der durch die Zangenschenkel aufgespannten Ebene. Darüber hinaus sind maulseitig auch noch besondere Drahtformungs-Zusammenwirkungsbereiche ausgebildet. Griffbereichsseitig des Gelenks sind Arbeitsbereiche zur Biegeumformung eines Drahtes vorgesehen, wobei ein Draht quer zur Längserstreckung eines Zangenschenkels um diesen herum gebogen werden kann nämlich dort, wo bei dem zweiten Zangenschenkel eine Einsteckbohrung vorgesehen ist, vornehmlich um einen so gehalterten Draht dann parallel zu der durch die Zangenschenkel aufgespannten Ebene biegen zu können.

Aus der US 6 497133 B1 ist eine Zange mit zwei an unterschiedlichen Zangenschenkeln als Arbeitsbereiche ausgebildeten Biegedornen bekannt. Bei einer Schließbewegung der Zange umfahren die Biegedorne einander ohne dass sie zur Zusammenwirkung zueinander geführt werden. Aus der US 2007/169593 A1 ist eine Zange bekannt, welche an unterschiedlichen Zangenschenkeln ausgebildete und zueinander zur Zusammenwirkung führbare Arbeitsbereiche aufweist. Keiner der Arbeitsbereiche ist als Biegedorn ausgebildet. Aus der US 3 956 950 A ist eine Zange mit einem Biegedorn bekannt, der jedoch dem anderen Zangenschenkel abgewandt und zudem maulseitig des Gelenkbereiches angeordnet ist. Im Hinblick auf zusammenwirkende Arbeitsbereiche ist aus der genannten US 2007/169593 A1 bekannt, diese Arbeitsbereiche als sich gegenüberliegende geschlossene Flächen auszubilden. In diesem Zusammenhang ist auch auf die CA 1054834 A zu verweisen.

Ausgehend von dem dargelegten Stand der Technik beschäftigt sich die Erfindung mit der Aufgabe, eine Zange mit griffseitig des Gelenks ausgebildeten Arbeitsbereichen anzugeben, die zur Drahtbearbeitung vorteilhaft ausgebildet sind.

Diese Aufgabe ist beim Gegenstand des Anspruches 1 gelöst, wobei darauf abgestellt ist, dass die Arbeitsbereiche einerseits als ein Biegedorn, ausgebildet an dem einen Zangenschenkel, und andererseits als dem Biegedorn zugeordnete Gegenfläche, ausgebildet an dem zweiten Zangenschenkel, vorgesehen sind, dass der Biegedorn durch beispielsweise einen Draht umschlingbar ist und eine quer zu einer hierbei gegebenen Umschlingungsebene verlaufende Längsachse aufweist, die mit der Zangenschenkel-Ebene einen Winkel einschließt und dass die Gegenfläche in Längsrichtung der Zangenschenkel den Biegedorn übertrifft.

Entsprechend der üblichen Handhabung im maulscitigen Bereich, etwa bei zusammenwirkenden Klemm-Arbeitsbereichen, kann somit auch griffbereichsseitig des Gelenkes ein Einschieben des Werkstückes parallel zu einer durch die Zangenschenkel aufgespannten Ebene erfolgen.

Die übliche Handhabung der Zange und Handbewegung mit der Zange kann grundsätzlich beibehalten werden, auch wenn die griffbereichsseitig des Gelenkes ausgebildeten, zusammenwirkenden Arbeitsbereiche benutzt werden. Soweit im Rahmen dieser Beschreibung eine Drahtbearbeitung angesprochen ist, ist damit auch ein ummantelter Draht, also ein Kabel, beispielsweise einbezogen.

Es ist bevorzugt, dass im geschlossenen Zustand der Zange die Zangenschenkel im Bereich der griffbereichsseitig ausgebildeten Arbeitsbereiche zumindest teilweise in Überdeckung zueinander sind. Sie liegen quer zu der von dem Zangenschenkel aufgespannten Ebene übereinander. Einer der Arbeitsbereiche ist in Überdeckung zu dem anderen Zangenschenkel gefahren. Dies bedeutet auch, dass, solange noch kein vollständiges Schließen gegeben ist, die Einführöffnung, die sich grundsätzlich parallel zu der durch die Zangenschenkel aufgestreckten Ebene ergibt, nach unten durch den später überfahrenen Zangenschenkelbereich geschlossen ist. Dies geht damit einher, dass bevorzugt die Zangenschenkel in diesem Bereich auch in einem Querschnitt quer zu ihrer Längserstreckung abgeflacht ausgebildet sind.

Darüber hinaus kann weiter bevorzugt vorgesehen sein, dass eine Einführungsrichtung in Erstreckungsrichtung des ersten Zangenschenkels und in Überquerungsrichtung zu dem zweiten Zangenschenkel gegeben ist. Die Überquerungsrichtung kann hierbei im Hinblick auf eine grundsätzlich gegebene Längserstreckung, wobei andererseits ein Zangenschenkel auch in der Ebene, in der er sich bewegt, gekrümmt verlaufen kann, in einem spitzen Winkel zu dieser Längserstreckung gegeben sein. Hinsichtlich des ersten Zangenschenkels, in dessen Erstreckungsrichtung die Einführrichtung gegeben ist, bezieht sich dies jedenfalls auf den für ein einzusteckendes Werkstück, etwa einem Draht, relevanten Längenbereich. Aufgrund von ergonomischen Erfordernissen oder sonstiger gestalterischer Bedingungen kann in einer gedachten Verlängerung des eingeführten Werkstückes gleichwohl noch eine Begrenzung der Einführbarkeit durch den Zangenschenkel gegeben sein.

Bei der Ausbildung der Arbeitsbereiche als zusammenwirkende Klemmflächen kann in Bezug auf eine ergänzende Ausbildung vorgesehen sein, dass gegenüberliegend zu der Ausbildung der Arbeitsbereiche als Biegedorn und Gegenfläche an denselben Zusammenwirkungsbereichen der Zangenschenkel, jedoch dann entsprechend erst bei einem Umdrehen der Zange sichtbar, die zusammenwirkenden Klemmflächen ausgebildet sind. Solche Klemmflächen können insbesondere zum Ziehen beispielsweise eines Drahtes verwendet werden.

Hinsichtlich des Biegedorns und der Gegenfläche ist weiter auch bevorzugt vorgesehen, dass diese auch im geschlossenen Zustand der Zange voneinander in einer Richtung parallel zu der von den Zangenschenkeln aufgespannten Ebene beabstandet sind. Sie kommen also auch bei geschlossener Zange nicht in unmittelbare Anlage. Diese Arbeitsbereiche sind jedoch bei geschlossener Zange so weit zueinander geführt, dass ein dazwischen beispielsweise gesteckter Draht fest gehaltert ist.

Hinsichtlich des Biegedorns sieht eine weiter bevorzugte Ausgestaltung vor, dass dieser zu seinem freien Ende hin einen abnehmenden Querschnitt aufweist. Der im Wesentlichen quer zu einer durch die Zangenschenkel aufgespannten Ebene frei abstehende Biegedorn erlaubt damit in einfacher Weise die unmittelbare Anlage. Diese Arbeitsbereiche sind jedoch bei geschlossener Zange so weit zueinander geführt, dass ein dazwischen beispielsweise gesteckter Draht fest gehaltert ist.

Hinsichtlich des Biegedorns sieht eine weiter bevorzugte Ausgestaltung vor, dass dieser zu seinem freien Ende hin einen abnehmenden Querschnitt aufweist. Der im Wesentlichen quer zu einer durch die Zangenschenkel aufgespannten Ebene frei abstehende Biegedorn erlaubt damit in einfacher Weise die Herstellung von beispielsweise Drahtschlaufen unterschiedlichen Durchmessers. Besonders bevorzugt ist in diesem Zusammenhang, dass der Querschnitt gestuft ausgebildet ist. Über die Höhe des Biegedorns sind mehrere, stufenpyramidenartige Absätze gegeben. Auf diese so gebildeten Stufen kann ein Draht jeweils aufgelegt werden, um dann die Biegung vorzunehmen. Hinsichtlich der Gegenfläche kann insoweit grundsätzlich vorgesehen sein, dass diese gegensinnig gestuft, also zur Höhe hin vorragend auf den anderen Zangenschenkel, an welchem der Biegedorn ausgebildet ist, gestaltet ist. Bevorzugt ist jedoch, dass der Biegedorn eine schräg auf den anderen Zangenschenkel zugeneigte Längsachse aufweist. Der durch einen Draht beispielsweise umschlingbare Biegedorn weist entsprechend eine Längsachse auf, die quer zu einer hierbei gegebenen Umschlingungsebene mit der Zangenschenkelebene einen Winkel einschließt, welcher Winkel bevorzugt ein spitzer Winkel ist.

Zur weiteren Ausgestaltung der hier beschriebenen Zange ist bevorzugt auch vorgesehen, dass maulbereichsseitig des Gelenks ein Schneid- und/oder Kneifbereich und/oder Quetschbereich und/oder ein Crimpbereich ausgebildet ist. Hierbei kann in weiterer Einzelheit zunächst anschließend an das Gelenk maulbereichsseitig der Crimpbereich ausgebildet sein und sich an dem Crimpbereich dann zwei unterschiedliche Schneidbereiche anschließen.

Bezüglich der beschriebenen, mit dem Biegedorn zusammenwirkenden Gegenfläche, ist in weiterer bevorzugter Ausführung vorgesehen, dass diese in Richtung quer zu der Mittelachse des Biegedorns, bzw. in einer Richtung parallel zu der durch die Zangenschenkel aufgespannten Ebene, unterbrochen ausgebildet ist. Hierbei kann in weiterer Einzelheit vorgesehen sein, dass die Gegenfläche nur über einen Teil ihrer Höhe unterbrochen ausgebildet ist. Die danach weiterhin gegebenen gegenflächigen Bereiche, also die tatsächlichen hinsichtlich der Fläche zur Einwirkung vorgesehenen Bereiche, sind dann bevorzugt durch Stirnflächen von Rippenausformungen gegeben. Durch die Rippenausformungen, die entsprechend zueinander freigeschnitten sind, ergibt sich in der genannten Richtung parallel zu einer durch die Zangenschenkel aufgespannten Ebene die Unterbrechung.

Die zusammenwirkenden Klemmflächen können in gleicher Weise hinsichtlich ihrer Flächenbereiche gestaltet sein. Die Klemmflächen sind dann auch teilweise durch Stirnflächen von Rippenausformungen gebildet.

Nachstehend ist die Erfindung des Weiteren anhand der beigefügten Zeichnung, die jedoch lediglich ein Ausführungsbeispiel darstellt, erläutert. Hierbei zeigt:
- Fig. 1: Die Zange in einer perspektivischen Ansicht von oben;
- Fig. 2: der Zangenkopf gemäß Fig. 1 in der Draufsicht;
- Fig. 3: eine Darstellung gemäß Fig. 1, jedoch bei zugewandter gegenüberliegender Zangenseite;
- Fig. 4: der Zangenkopf in der Darstellung gemäß Fig. 3 in Einzeldarstellung;
- Fig.5: einen Querschnitt durch den Gegenstand gemäß Fig. 3, geschnitten entlang der Linie V-V;
- Fig. 6: einen Querschnitt durch den Gegenstand gemäß Fig. 2, geschnitten entlang der Linie VI-VI;
- Fig. 7: eine perspektivische Ansicht von schräg hinten des Zangenkopfes in der Ansicht gemäß Fig. 4, geöffnet;
- Fig. 8: eine perspektivische Ansicht des Zangenkopfes in der Darstellung gemäß Fig. 2, geöffnet;
- Fig. 9: eine perspektivische Ansicht von vorne des Zangenkopfes in der Darstellung gemäß Fig. 4;
- Fig. 9a - d: Abwandlungen hinsichtlich der Ausgestaltung des Biegedorns und der zugehörigen Gegenfläche;
- Fig. 10: einen Querschnitt durch den Gegenstand gemäß Fig. 4, geschnitten entlang der Linie X-X;
- Fig. 11: ein Handhabungsbeispiel des Zangenkopfes betreffend maulseitige Arbeitsbereiche, hier in der Ausbildung als Seitenschneiderelemente;
- Fig. 12: eine Darstellung gemäß Fig. 11, betreffend AbisolierArbeitsbereiche;
- Fig. 13: eine Darstellung der Benutzung der griffsbereichsseitigen Arbeitsbereiche der Zange bezüglich der Darstellung gemäß Fig. 8;
- Fig. 14: eine Darstellung der Nutzung eines weiteren Seitenschneiderbereiches im Zangenkopf;
- Fig. 15: eine Darstellung der Benutzung der Arbeitsbereiche bestehend aus Biegedorn und Gegenfläche;
- Fig. 16: einen Querschnitt durch den Gegenstand gemäß Fig. 15, geschnitten entlang der Linie XVI-XVI.

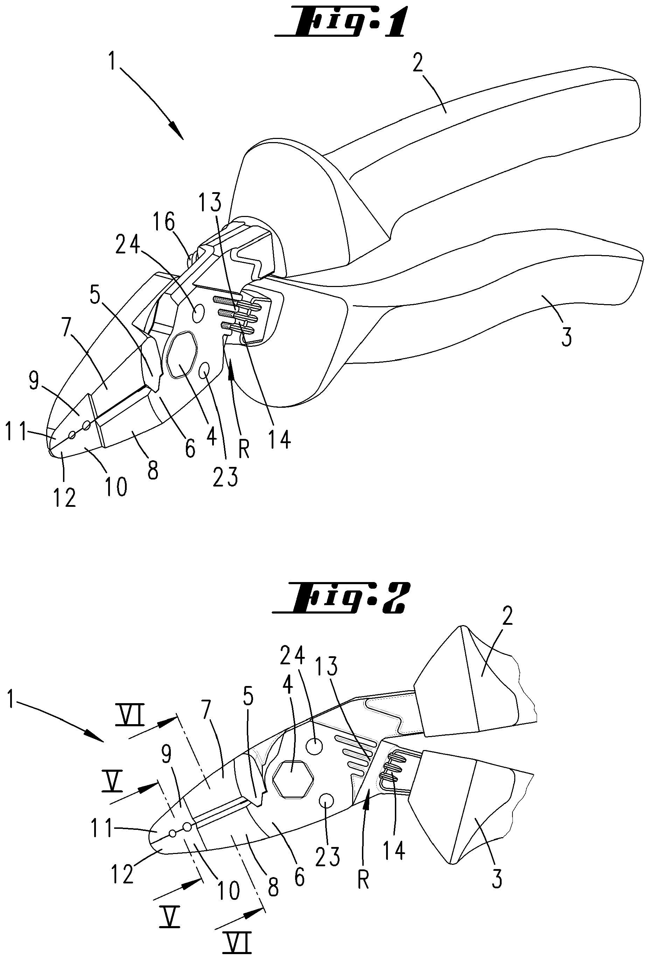

Dargestellt und beschrieben ist, zunächst mit Bezug zu Fig. 1, eine Zange 1 mit zwei in einem Gelenkbereich zueinander sich kreuzend angeordneten Zangenschenkeln 2, 3, wobei im Weiteren auch der Zangenschenkel 3 als erster Zangenschenkel und der Zangenschenkel 2 als zweiter Zangenschenkel bezeichnet ist. Die Zangenschenkel kreuzen sich in einem Gelenk 4 und wirken maulbereichsseitig des Gelenks 4 in teilweise an dem ersten Zangenschenkel 3 und teilweise an dem zweiten Zangenschenkel 2 ausgebildeten Arbeitsbereichen 5, 6, 7, 8, 9, 10 und 11, 12 zusammen, während sie griffbereichsseitig mittels Arbeitsbereichen 13, 14 und 15, 16 zusammenwirken, die auch jeweils teilweise an dem ersten Zangenschenkel und teilweise an dem zweiten Zangenschenkel ausgebildet sind.

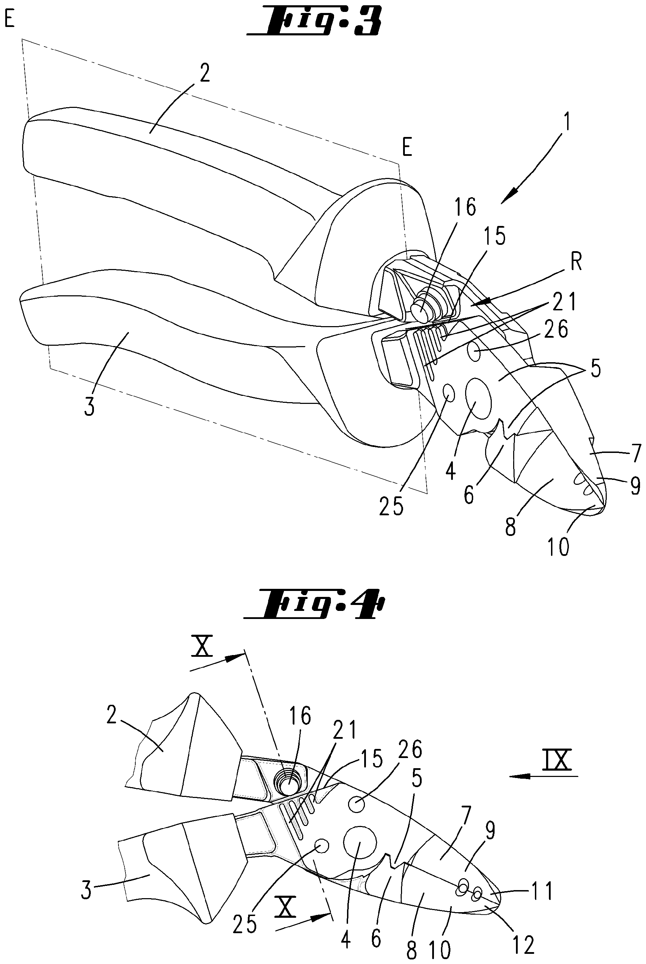

Die Zange weist darüber hinaus Scherlöcher 23, 24 bzw. 24, siehe Fig. 2 bzw. 25, 26 an dem Zangenschenkel 2 bzw. 3 auf, zu letzteren siehe Fig. 3. Diese Scherlöcher sind bei geschlossener Zange in üblicher Weise nicht in Überdeckung, wohl aber teilweise bei teilweise geöffneter Zange. Ein hindurchgesteckter Draht, hierbei quer zu der Ebene E-E hindurchgesteckt, kann so abgeschert werden.

Das Gelenk 4 ist in dem Sinne exzentrisch ausgebildet, dass es bezüglich der Gesamtgewerbefläche, also der Fläche, in welcher die Zangenschenkel übereinander liegen, bei geschlossener Zange, nach vorne, spitzenseitig der Zange versetzt angeordnet ist.

Durch die Zangenschenkel 2 ist eine Ebene E-E aufgespannt, siehe etwa Fig. 3. Die Arbeitsbereiche 13, 14 und 15, 16, die griffsbereichsseitig des Gelenks 4 ausgebildet sind, sind zur Bearbeitung eines Werkstückes parallel zu dieser Ebene E-E zugänglich, wobei ein an dem ersten Zangenschenkel 3 (Darstellung gemäß Fig. 3) bzw. zweiten Zangenschenkel 2 (siehe etwa Darstellung gemäß Fig. 2) ausgebildeter Arbeitsbereich an der dem anderen, zweiten oder ersten Zangenschenkel zugewandten Randkante dieses Zangenschenkels ausgebildet ist. Eine Zangen-Schließbewegung führt die Arbeitsbereiche 13, 14 bzw. 15, 16 zur Zusammenwirkung zueinander. Die Zugänglichkeit in paralleler Weise zu der Ebene E-E bedeutet nicht, dass beim tatsächlichen Arbeiten mit der Zange auch andere Einführungen vorgenommen werden können. Je nach Ausrichtung des Biegedorns, wenn dieser bspw. auch eine Ausrichtung der Längsachse geneigt in Längsrichtung der Zange aufweisen sollte, was grundsätzlich möglich ist, empfiehlt es sich natürlich schon von daher, die Einführung auch in schräger Weise, also in einem spitzen Winkel zu der genannten Ebene E-E vorzunehmen.

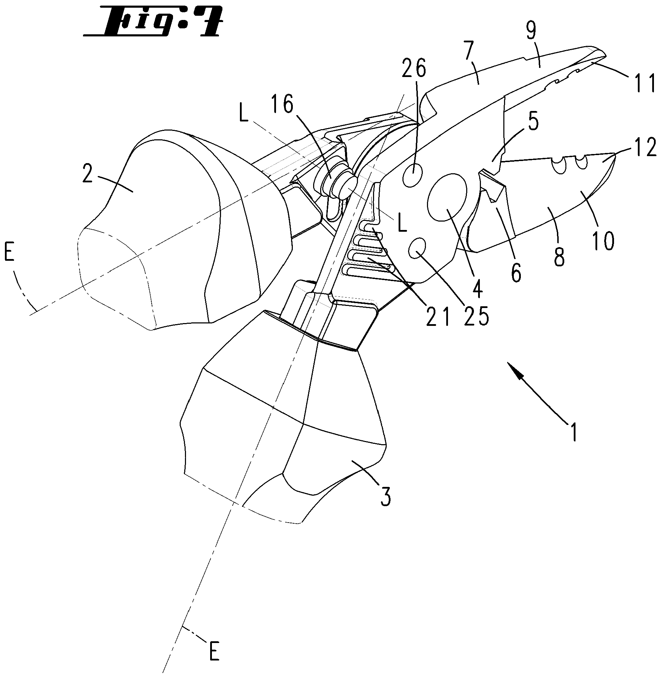

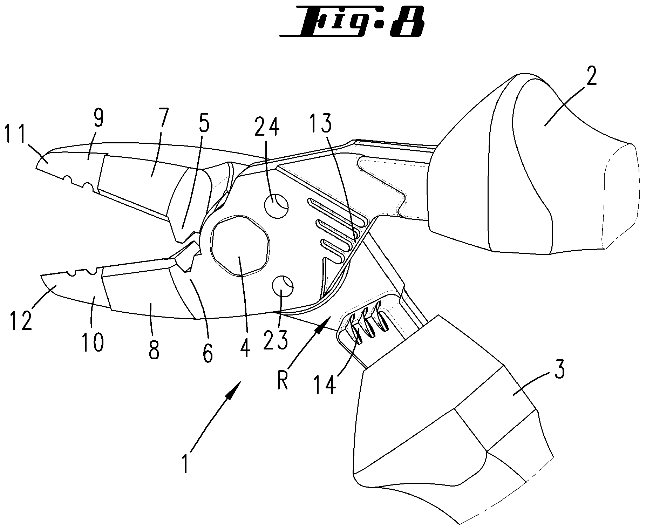

Wie sich etwa aus einem Vergleich der Fig. 2 und 8 bzw. 3 und 7 ergibt, sind im geschlossenen Zustand der Zange 1 die Zangenschenkel 2, 3 im Bereich der griffbereichsseitig ausgebildeten Arbeitsbereiche 13, 14 bzw. 15, 16 in Bezug auf die Arbeitsbereiche 13, 14 vollständig und in Bezug auf die Arbeitsbereiche 15, 16 teilweise in Überdeckung miteinander. Der Zangenschenkel 3 und auch der Zangenschenkel 2 ist in diesem an den Gelenkbereich anschließenden Schenkelansatz, in welchem die zusammenwirkenden Arbeitsbereiche miteinander ausgebildet sind, im Querschnitt abgeflacht, annähernd rechteckig, gebildet. Somit ist auch eine günstige Auflagefläche in diesem Bereich zwischen den Zangenschenkeln noch gegeben.

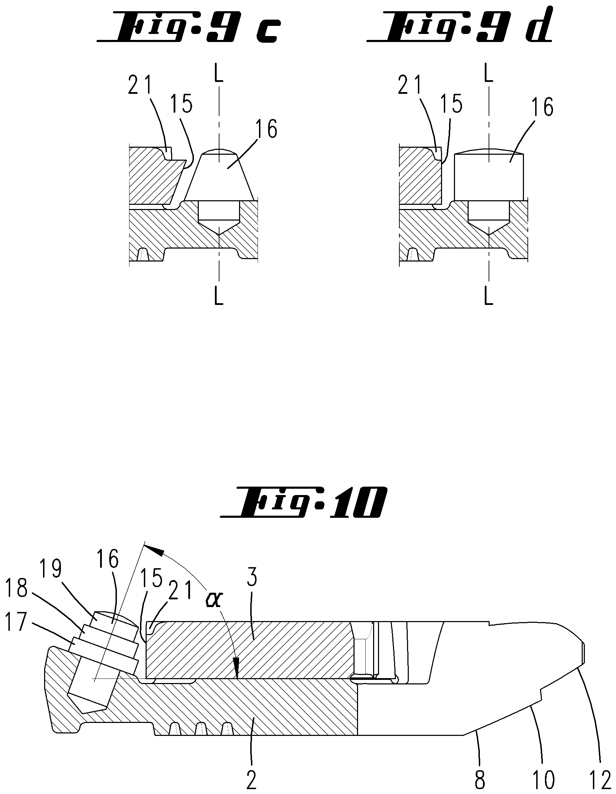

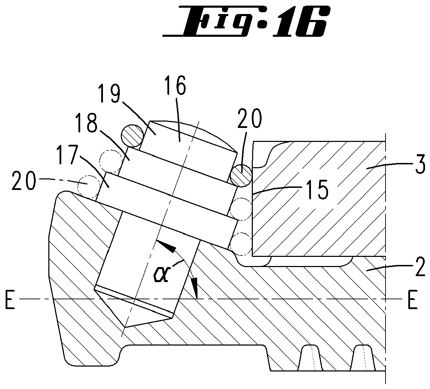

Wie sich in weiterer Einzelheit aus den Darstellungen ergibt, ist der Arbeitsbereich 16 als Biegedorn ausgebildet. Hierbei weist der Biegedorn in weiterer Einzelheit eine Längsachse L-L auf, die mit der Ebene E-E einen in Fig. 10 bzw. Fig. 16 angedeuteten spitzen Winkel Alpha einschließt. Der spitze Winkel Alpha kann etwa 70° bis 89° betragen, wobei in die Offenbarung auch alle Zwischenwerte, insbesondere in 1°-Schritten hiermit einbezogen sind. Grundsätzlich ist natürlich auch zunächst ein rechter Winkel möglich.

Weiter ist von Bedeutung, dass der Biegedorn 16 über seine Höhe, wie dies etwa besonders deutlich aus Fig. 17 hervorgeht, abgestuft ausgebildet ist. Im Einzelnen sind drei Bereiche 17, 18, 19 unterschiedlichen Durchmessers gebildet, von der Ebene E-E zum freien Ende des Biegedorns hin abnehmend. Bildlich gesehen handelt es sich um übereinander angeordnete Scheiben unterschiedlichen Durchmessers. Während im unteren Bereich der Abschnitt 17 beispielsweise einen Durchmesser von 5 bis 8 mm aufweisen kann, ist der darüber liegende Bereich 18 beispielsweise mit einem Durchmesser ausgebildet der 10 % kleiner ist und der darüber liegende Bereich 19 nochmals bevorzugt um das gleiche Verhältnis im Durchmesser verkleinert ist.

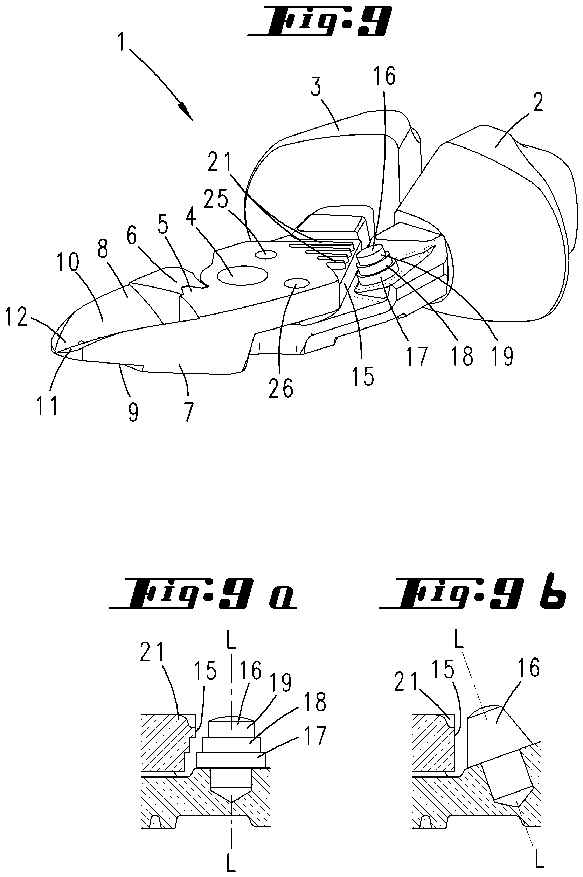

In den Fig. 9a bis 9d sind mögliche Gestaltungen des Biegedorns 16 und der zugehörigen Gegenfläche ausschnittsweise dargestellt. Gemäß Fig. 9a kann sowohl der Biegedorn, wie die zugehörige Gegenfläche, letztere dann gegensinnig, gestuft ausgebildet sein. Diese Variante ist natürlich sowohl mit rechtem Winkel a, wie in Fig. 9a dargestellt, wie auch mit einem spitzen Winkel α möglich.

Gemäß Fig. 9b ist der Biegedorn konisch ausgebildet, bei einer Mittelachse L-L, die mit dem genannten spitzen Winkel α zu der Ebene E-E verläuft.

Gemäß Fig. 9c weist der Biegedorn eine im rechten Winkel zu der Ebene E-E, bei insgesamt konischer Gestaltung, verlaufende Mittellängsachse L-L auf. Die Gegenfläche ist in der Querschnittsdarstellung entsprechend der konischen Fläche des Biegedorn zu dem Biegedorn hin geneigt, schließt also mit der Ebene E-E einen stumpfen Winkel ein.

Fig. 9d schließlich zeigt eine ebenfalls in gleicher Weise mögliche zylindrische Gestaltung des Biegedorns 16, bei einer Ausbildung der Gegenfläche gemäß Fig. 9b.

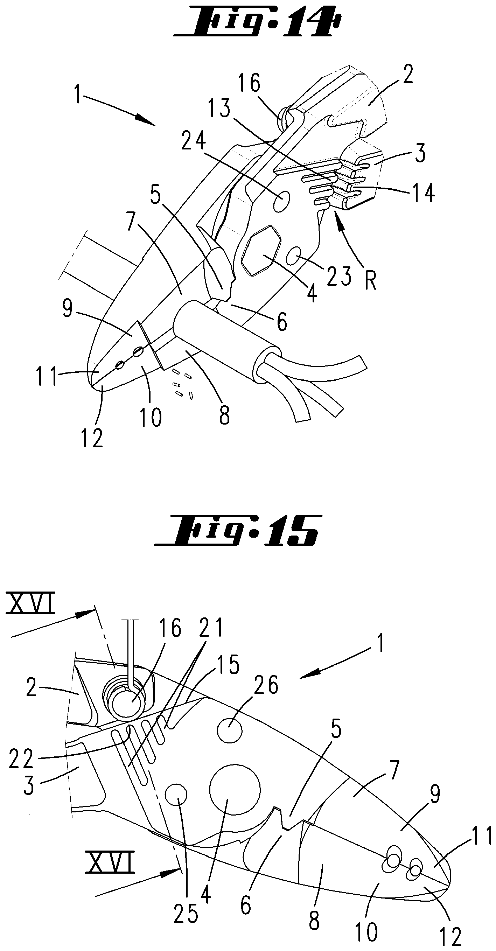

Wie weiter ersichtlich kann ein Draht 20 in einfacher Weise zwischen die Umfangs-Außenfläche eines Bereiches 17, 18 oder 19 und der rechtwinklig zu der Ebene E-E verlaufenden Gegenfläche, Arbeitsbereich 15, gefasst bzw. geklemmt werden und sodann von Hand eine Umschlingungsbewegung um den Biegedorn, den jeweilig ausgewählten Bereich 17, 18 oder 19, durchgeführt werden. So können in den Draht Ösen oder Schlaufen eingebogen werden. Dies ergibt sich auch etwa aus der Darstellung der Fig. 15. Wobei nach einem ersten Biegen eine Verschiebung des Drahtes in der durch die Schlaufe aufgespannten Ebene erfolgt, bis eine Schlaufe oder Öse vollständig gebogen ist.

Wie sich weiterhin aus Fig. 16 ergibt, kann der Biegedorn 16 als gesondertes Teil in den Zangenschenkel 2 eingepresst oder eingeschraubt sein. Er kann auch integral hiermit etwa geschmiedet sein.

Wie sich weiterhin aus Fig. 16 ergibt, welche eine geschlossene Stellung der Zange 1 darstellt, sind die zusammenwirkenden Bereiche des Biegedorns 16 und der Gegenfläche 15 auch im geschlossenen Zustand der Zange voneinander beabstandet. Dies etwa im Bereich eines üblichen Drahtquerschnittes, also etwa im Bereich von 1 bis 2 mm.

Die Flächen, welche die Gegenfläche 15 wie auch die Arbeitsbereiche 12, 13 bilden, sind im Einzelnen durch quer zu einer Einführrichtung R, siehe etwa Fig. 4, 7 und 15, verlaufende einzelne Rippen 21 gebildet. Diese Rippen haben ersichtlich eine unterschiedliche Länge, die entgegen der Einführrichtung R abnimmt. Die kopfseitigen Enden der Rippen verlaufen etwa entlang einem Radius um das Gelenk 4.

Die Arbeitsbereiche bzw. zusammenwirkenden Flächen, insbesondere die Gegenfläche 15, sind durch Stirnflächen 22, siehe etwa Fig. 14 und Fig. 15, der Rippen 21 gebildet. Bei den an dem Zangenschenkel 3 ausgebildeten Rippen, die in Bezug auf die Greif-Arbeitsbereiche 13, 14 vorgesehen sind, ist jeweils eine gleiche Länge vorgesehen.

Im Weiteren weist die Zange maulbereichsseitig des Gelenks 4 zunächst einen Crimpbereich, gebildet durch die Arbeitsbereiche 5, 6, sodann einen Schneidbereich, zur Nutzung der Zange als Seitenschneider, gebildet durch die Arbeitsbereiche 7, 8, sodann Abisolieröffnungen, gebildet durch die Arbeitsbereiche 9, 10 und schließlich nochmals einen Seitenschneiderbereich, gebildet durch die Arbeitsbereiche 11, 12 auf.

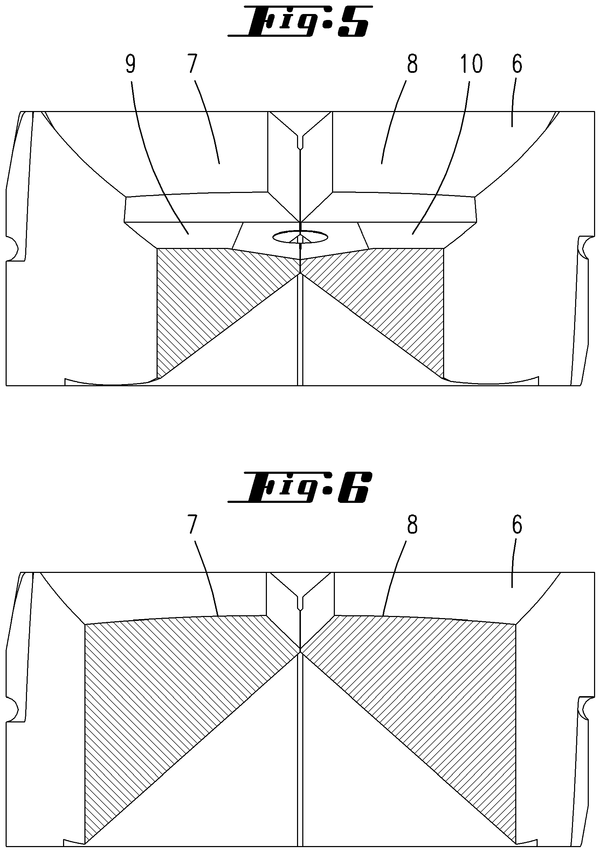

Die Gestaltung dieser einzelnen Arbeitsbereiche ergibt sich auch aus den Fig. 5 und 6, wobei auch in Fig. 5 im Bereich der zwischen den Abisolieröffnungen gegebenen Schneiden geschnitten ist, aber im Weiteren auch eine Abisolieröffnung zu sehen ist, während Fig. 6 den Seitenschneiderbereich darstellt.

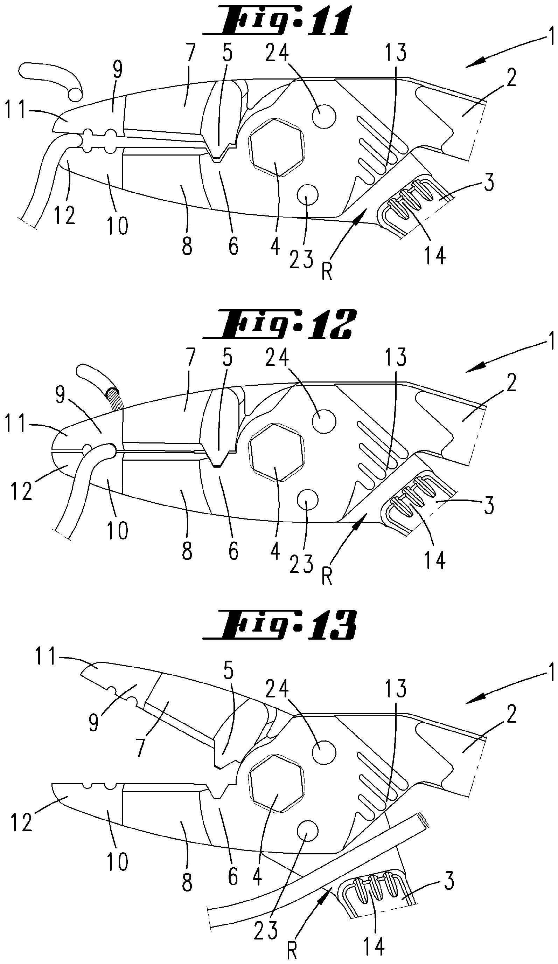

Hinsichtlich der Benutzung zeigen die Fig. 11 bis 14 entsprechende Beispiele. Mittels der Arbeitsbereiche 11, 12 kann ein schneidendes Trennen eines Drahtes vorgenommen werden, siehe Fig. 11. Mittels der Arbeitsbereiche 9, 10 ein Abisolieren eines einen Isolierüberzug aufweisenden Drahtes, siehe Fig. 12.

Mittels der Arbeitsbereiche 13, 14 kann ein klemmendes Erfassen eines Drahtes vorgenommen werden, siehe Fig. 13. Es kann sich hierbei auch um eine Ziehleine handeln, die ergriffen wird.

Schließlich kann mittels der Arbeitsbereiche 7, 8 ein Abtrennen eines Kabels oder eines Drahtes, siehe Fig. 14, vorgenommen werden.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren in ihrer fakultativ nebengeordneten Fassung eigenständige erfinderische Weiterbildung des Standes der Technik, insbesondere um auf Basis dieser Ansprüche Teilanmeldungen vorzunehmen.

## Patentansprüche

1. Zange (1) mit zwei an einem Gelenkbereich zueinander sich kreuzend angeordneten Zangenschenkeln (2, 3), einem ersten Zangenschenkel (3) und einem zweiten Zangenschenkel (2), die beidseitig des Gelenks (4) zusammenwirkende, jeweils teilweise an dem ersten und teilweise an dem zweiten Zangenschenkel (3, 2) ausgebildete Schneid- und/oder Greif-Arbeitsbereiche (5, 6, 7, 8, 9, 10, 11, 12, 13, 14, 15, 16) zur Drahtbearbeitung aufweisen, wobei die griffbereichsseitig liegenden Arbeitsbereiche (13,14, 15, 16) für ein Werkstück parallel zu einer von den Zangenschenkeln (2, 3) aufgespannten Ebene (E-E) zugänglich sind und zumindest ein an dem ersten Zangenschenkel (3) ausgebildeter Arbeitsbereich an der dem zweiten Zangenschenkel (2) zugewandten Randkante des ersten Zangenschenkels (3) ausgebildet ist, wobei eine Zangen-Schließbewegung diese Arbeitsbereiche (13, 14, 15, 16) für ein Werkstück zur Zusammenwirkung zueinander führt, wobei die Arbeitsbereiche einerseits als ein Biegedorn (16), ausgebildet an dem einen Zangenschenkel (2), und andererseits als dem Biegedorn (16) zugeordnete Gegenfläche (15), ausgebildet an dem zweiten Zangenschenkel (3), vorgesehen sind, der Biegedorn (16) durch beispielsweise einen Draht umschlingbar ist und eine quer zu einer hierbei gegebenen Umschlingungsebene verlaufende Längsachse (L-L) aufweist, die mit der Zangenschenkel-Ebene (E-E) einen Winkel einschließt, **dadurch gekennzeichnet, dass** die Gegenfläche (15) in Längsrichtung der Zangenschenkel (2,3) den Biegedorn (16) übertrifft.

2. Zange nach Anspruch 1, **dadurch gekennzeichnet, dass** im geschlossenen Zustand der Zange (1) die Zangenschenkel (2, 3) im Bereich der griffbereichsseitig ausgebildeten Arbeitsbereiche (13, 14, 15, 16) zumindest teilweise in einer Richtung quer zur Ebene E-E in Überdeckung zueinander sind.

3. Zange nach Anspruch 2, **dadurch gekennzeichnet, dass** eine Einführungsrichtung für einen zu bearbeitenden Draht in Erstreckungsrichtung des ersten Zangenschenkels (3) und in Überquerungsrichtung zu dem zweiten Zangenschenkel (2) gegeben ist.

4. Zange nach einem der vorhergehenden Ansprüche, **dadurch gekennzeichnet, dass** der Biegedorn (16) und die Gegenfläche (15) auch im geschlossenen Zustand der Zange (1) voneinander in einer Richtung parallel zu der von den Zangenschenkeln (2, 3) aufgespannten Ebene (E-E) beabstandet sind.

5. Zange nach einem der vorhergehenden Ansprüche, **dadurch gekennzeichnet, dass** der Biegedorn (16) zu seinem freien Ende einen abnehmenden Querschnitt aufweist.

6. Zange nach Anspruch 5, **dadurch gekennzeichnet, dass** der Querschnitt des Biegedorns (16) gestuft ausgebildet ist,

7. Zange nach einem der vorhergehenden Ansprüche, **dadurch gekennzeichnet, dass** die Längsachse (L-L) mit der Zangenschenkel-Ebene (E-E) einen spitzen Winkel einschließt.

8. Zange nach einem der vorhergehenden Ansprüche, **dadurch gekennzeichnet, dass** maulbereichsseitig des Gelenks (4) ein Schneid- und/oder ein Kneifbereich und/oder ein Crimpbereich ausgebildet ist.

9. Zange nach Anspruch 8, **dadurch gekennzeichnet, dass** maulbereichsseitig des Gelenks (4) zunächst ein Crimpbereich ausgebildet ist und sich an dem Crimpbereich zwei unterschiedliche Schneidbereiche anschließen.

10. Zange nach einem der vorhergehenden Ansprüche, **dadurch gekennzeichnet, dass** die Gegenfläche (15) in Richtung quer zu der Längsachse (L-L) des Biegedorns (16) unterbrochen ausgebildet ist.

11. Zange nach Anspruch 10, **dadurch gekennzeichnet, dass** die Gegenfläche (15) nur über einen Teil ihrer Höhe unterbrochen ausgebildet ist.

12. Zange nach einem der Ansprüche 10 oder 11, **dadurch gekennzeichnet, dass** die Gegenfläche (15) durch Stirnflächen von Rippenausformungen gebildet ist.

## Claims

1. Pliers (1) comprising two plier handles (2, 3) arranged relative to one another so as to cross in a joint region, a first plier handle (3) and a second plier handle (2) which have cutting and/or gripping working regions (5, 6, 7, 8, 9, 10, 11, 12, 13, 14, 15, 16), for working on wire, which regions interact on either side of the joint (4) and are each formed in part on the first and in part on the second plier handle (3, 2), the working regions (13, 14, 15, 16) located on the gripping region side being accessible for a workpiece in parallel with a plane (E-E) spanned by the plier handles (2, 3), and at least one working region formed on the first plier handle (3) being formed on the boundary edge of the first plier handle (3) facing the second plier handle (2), a plier closing movement of these working regions (13, 14, 15, 16) for a workpiece leading to interaction with one another, the working regions being provided both as a bending mandrel (16) formed on one plier handle (2) and as the mating surface (15) associated with the bending mandrel (16) and formed on the second plier handle (3), it being possible for a wire to be wrapped around the bending mandrel (16), for example, and said bending mandrel comprising a longitudinal axis (L-L) extending transversely to a wrapping plane provided thereby, which longitudinal axis forms an angle together with the plier handle plane (E-E),
**characterised in that** the mating surface (15) extending beyond the bending mandrel (16) in the longitudinal direction of the plier handles (2, 3).

2. Pliers according to claim 1, **characterised in that**, when the pliers (1) are closed, the plier handles (2, 3) mutually overlap, at least in part, in the region of the working regions (13, 14, 15, 16) formed on the gripping region side, in a direction that is transverse to the plane E-E.

3. Pliers according to claim 2, **characterised in that** an insertion direction for a wire to be worked on is given in the extension direction of the first plier handle (3) and in the region crossing over to the second plier handle (2).

4. Pliers according to any of the preceding claims, **characterised in that**, even when the pliers (1) are closed, the bending mandrel (16) and the mating surface (15) are mutually spaced apart in a direction in parallel with the plane (E-E) spanned by the plier handles (2, 3).

5. Pliers according to any of the preceding claims, **characterised in that** the bending mandrel (16) has a cross section that decreases towards its free end.

6. Pliers according to claim 5, **characterised in that** the cross section of the bending mandrel (16) is stepped.

7. Pliers according to any of the preceding claims, **characterised in that** the longitudinal axis (L-L) forms an acute angle together with the plier handle plane (E-E).

8. Pliers according to any of the preceding claims, **characterised in that** a cutting and/or pinching and/or crimping region is formed on the jaw-region side of the joint (4).

9. Pliers according to claim 8, **characterised in that** a crimping region is first formed on the jaw-region side of the joint (4), and two different cutting regions adjoin the crimping region.

10. Pliers according to any of the preceding claims, **characterised in that** the mating surface (15) is formed discontinuously in the direction transverse to the longitudinal axis (L-L) of the bending mandrel (16).

11. Pliers according to claim 10, **characterised in that** the mating surface (15) is discontinuous only over one portion of its height.

12. Pliers according to either claim 10 or claim 11, **characterised in that** the mating surface (15) is formed by end faces of rib formations.

## Revendications

1. Pince (1) avec deux branches de pince (2, 3) agencées en se croisant l'une l'autre dans une zone d'articulation, une première branche de pince (3) et une deuxième branche de pince (2) ayant des deux côtés de l'articulation (4) des zones de travail de coupe et/ou de prise (5, 6, 7, 8, 9, 10, 11, 12, 13, 14, 15, 16) pour le traitement de fil qui coopèrent ensemble et sont respectivement formées en partie sur la première et en partie sur la deuxième branche de pince (3, 2), dans laquelle les zones de travail (13, 14, 15, 16) pour une pièce d'oeuvre situées côté zone de poignées sont accessibles parallèlement à un plan (E-E) défini par les branches de pince (2, 3) et au moins une zone de travail formée sur la première branche de pince, est formée au niveau du bord périphérique de la première branche de pince (3) qui est en regard de la deuxième branche de pince (2), dans laquelle un mouvement de fermeture de pince conduit à rassembler ces zones de travail (13, 14, 15, 16) pour une pièce d'oeuvre pour coopérer ensemble, dans laquelle les zones de travail sont prévues d'une part en tant que mandrin de pliage (16) formé à l'une des branches de pince (2) et d'autre part en tant que contre-surface (15) associée au mandrin de pliage (16), formée sur la deuxième branche de pince (3), le mandrin de pliage peut être entouré par exemple par un fil et présente un axe longitudinal (L-L) s'étendant transversalement à un plan d'entourage défini ce faisant, lequel axe longitudinal (L-L) forme un angle avec le plan des branches de pince (E-E), **caractérisée en ce que** la contre-surface (15) dépasse le mandrin de pliage (16) dans la direction longitudinale des branches de pince (12, 3).

2. Pince selon la revendication 1, **caractérisée en ce que**, à l'état fermé de la pince, les branches de pince (2, 3) dans la région des zones de travail (13, 14, 15, 16) formées côté zone de poignées, se recouvrent au moins partiellement dans une direction transversale au plan E-E.

3. Pince selon la revendication 2, **caractérisée en ce qu'**est procurée une direction d'insertion pour un fil à travailler, dans la direction d'extension de la première branche de pince (3) et dans la direction de traversée vers la deuxième branche de pince (2).

4. Pince selon l'une des revendications précédentes, **caractérisée en ce que**, à l'état fermé de la pince (1), le mandrin de pliage (16) et la contre-surface (15) sont également distants l'un de l'autre dans une direction parallèle au plan (E-E) défini par les branches de pince (2, 3).

5. Pince selon l'une des revendications précédentes, **caractérisée en ce que** le mandrin de pliage (16) présente une section transversale qui diminue vers son extrémité libre.

6. Pince selon la revendication 5, **caractérisée en ce que** la section transversale du mandrin de pliage (16) est formée de manière étagée.

7. Pince selon l'une des revendications précédentes, **caractérisée en ce que** l'axe longitudinal (L-L) forme un angle aigu avec le plan des branches de pince (E-E).

8. Pince selon l'une des revendications précédentes, **caractérisée en ce qu'**une zone de coupe et/ou de pincement et/ou de sertissage est formée du côté de l'articulation (4) correspondant à la zone des mâchoires.

9. Pince selon la revendication 8, **caractérisée en ce que** du côté de l'articulation (4) correspondant à la zone des mâchoires est d'abord formé une zone de sertissage et deux zones de coupe différentes suivent la zone de sertissage.

10. Pince selon l'une des revendications précédentes, **caractérisée en ce que** la contre-surface (15) est formée de manière interrompue dans la direction transversale à l'axe longitudinale (L-L) du mandrin de pliage (16).

11. Pince selon la revendication 10, **caractérisée en ce que** la contre-surface est formée de manière interrompue que sur une partie de sa hauteur.

12. Pince selon l'une des revendications 10 ou 11, **caractérisée en ce que** la contre-surface (15) est formée par des surface frontales de formations formant des nervures.
